# EUROPÄISCHE PATENTANMELDUNG

(11) **EP 1 538 382 A2**
(43) Veröffentlichungstag der Anmeldung: **08.06.2005**
(21) Anmeldenummer: 04028910.0
(22) Anmeldetag: 07.12.2004
(51) Int. Cl.: F16L 17/02, F16L 19/02

(54) **Spannring einer spannbaren Rohrkupplung**

(30) Priorität: 07.12.2003 DE 10357382
(71) Anmelder: Ilesic, Peter, 2000 Maribor (SI)
(72) Erfinder: Ilesic, Peter, 2000 Maribor (SI)
(74) Vertreter: Konnerth, Dieter Hans

(57) **Zusammenfassung**

Die Erfindung betrifft einen Spannring einer spannbaren Rohrkupplung zum axialen Verbinden zweier Rohre, wobei der in Umfangsrichtung unterteilte und aus metallischem Werkstoff hergestellte Spannring beim Schließen des Gehäuses der Rohrkupplung mittels seines Innenrandes oder mittels an seinem Innenrand gebildeter Zähne in einen Halteeingriff an der Außenseite des zugeordneten Rohres verspannt wird, wobei zum Verbessern der Festigkeitseigenschaften des Spannringes vorgesehen ist, daß in den Spannring voneinander beabstandete Vertiefungen eingedrückt sind und daß das Material des Spannringes von den Vertiefungen in die Zwischenabschnitte zwischen den Vertiefungen verdrängt ist, so daß an dem vor der Verformung ungezahnten Innenrand des Spannringes zahnartige Materialvorsprünge als Eingriffsstellen gebildet sind, oder daß in den Spannring in einem Zwischenzahnabschnitt zwischen zwei benachbarten Zähnen zumindest eine Vertiefung eingedrückt ist und das Material des Spannringes von der Vertiefung zu dem den Zahn aufweisenden Zahnabschnitt und/oder in den Zwischenzahnabschnitt verdrängt ist.

## Beschreibung

Die Erfindung betrifft einen Spannring einer spannbaren Rohrkupplung mit den Merkmalen des Oberbegriffs des Anspruchs 1 bzw. des Oberbegriffs des Anspruchs 5 sowie ein Verfahren zum Herstellen eines derartigen Spannringes.

Beim Schließen und verengenden Verspannen des Gehäuses einer z. B. aus der DE 44 08 743 C2 bekannten Rohrkupplung mit einer darin enthaltenen Dichtungsmanschette an den Rohren einer Rohrleitung verbleibt üblicherweise ein Spalt zwischen den Abschlußwänden des Gehäuses und der jeweiligen Rohrwand. Durch diesen Spalt kann Verschmutzung zu der elastomeren Dichtungsmanschette gelangen und sie kann UV-Strahlung, Ozon oder anderen schädlichen äußeren Einflüssen ausgesetzt sein, was zu einer Verschlechterung der elastomeren Werkstoffeigenschaften und zu Undichtigkeiten führen kann.

Um diesen Nachteil zu beheben, ist in der DE 296 08 499 U1 eine Rohrkupplung für Rohrleitungen vorgeschlagen geworden, die entsprechend der DE 44 08 743 C2 eine elastomere Dichtungsmanschette enthält, die in einem schließbaren Gehäuse mit radialen Endwänden angeordnet ist und zwei axial beabstandete und radial einwärts hervorstehende Ringwülste zum abdichtenden Anlegen an eine Rohrleitung aufweist. Jede Stirnseite der Dichtungsmanschette ist zur Längsachse der Rohrkupplung hin einwärts geneigt. An der Stirnseite liegt ein konischer, am Umfang unterteilter Spannring an, der sich axial und radial am Gehäuse abstützt und beim verengenden Schließen des Gehäuses und Verspannen der Dichtungsmanschette am jeweiligen Rohr der Rohrleitung anliegt. Gemäß einem Ausführungsbeispiel weist jeder Spannring einen scharfkantigen Innenrand zum Bilden eines axial festgelegten Eingriffs mit dem jeweiligen der beiden zu kuppelnden Rohre auf. Zusätzlich kann jeder Spannring an seinem Innenrand mit einer Vielzahl von voneinander beabstandeten Einkerbungen versehen sein.

Aus der EP 0 931 966 B1 ist eine Rohrkupplung mit einem Spannring bekannt geworden, der einen mit Zähnen gebildeten Innenrand aufweist. In die Außenseite jedes Zahns ist in der Nähe des freien Zahnendes wenigstens eine Vertiefung eingedrückt, durch die das Material des Zahnes auf dieser Zahnseite zum freien Zahnende hin verdrängt ist. Die Zähne werden durch die Verdrängung des Zahnmaterials beim Ausbilden der Vertiefung schärfer zugespitzt. Des weiteren wird durch das Eindrücken der Vertiefungen das Material der Zähne im Bereich der Vertiefungen verdichtet und dadurch gleichzeitig verfestigt.

Der Erfindung liegt die Aufgabe zugrunde, einen Spannring mit den Merkmalen des Oberbegriffs des Anspruchs 1 bzw. des Oberbegriffs des Anspruchs 5 zu schaffen, der im Hinblick auf seine Gestaltung und seine Festigkeitseigenschaften verbessert ist, sowie ein verbessertes Verfahren zu dessen Herstellung anzugeben.

Diese Aufgabe wird bei einem Spannring mit den Merkmalen des Oberbegriffs des Anspruchs 1 erfindungsgemäß dadurch gelöst, daß in den Spannring in einem Zwischenzahnabschnitt zwischen zwei benachbarten Zähnen zumindest eine Vertiefung eingedrückt ist und das Material des Spannringes von der Vertiefung zu dem den Zahn aufweisenden Zahnabschnitt verdrängt und/oder in dem Zwischenzahnabschnitt verlagert ist. Durch das Verdrängen des Materials aus dem Zwischenzahnabschnitt zu dem Zahnabschnitt wird dieser und damit auch der Zahn selbst verstärkt. Da am Zahnabschnitt oder dem Zahn selbst keine Vertiefung gebildet wird, wird jegliche Schwächung am Zahn oder am Zahnabschnitt im Bereich des Zahnes vermieden. Durch das Verdrängen des Materials innerhalb des Zwischenzahnabschnitts, d. h. durch eine Verlagerung oder Umschichtung des Materials innerhalb des Zwischenzahnabschnitts, kann das Material gezielt zur Verstärkung einer bestimmten Stelle des Spannringes zwischen den Zähnen verlagert werden. So kann insbesondere der dem Zahnzwischenraum oder der Zahnaussparung zugeordnete Zwischenzahnabschnitt durch Materialverdickung und/oder Materialverfestigung. an der Mittellinie des Zwischenzahnabschnitts verstärkt werden, an der der Spannring aufgrund des Zahnzwischenraumes bzw. der Aussparung ohne die Materialumformung die geringste Festigkeit aufweist. Durch eine Kombination der beiden angegebenen Möglichkeiten zum Verdrängen von Material kann die Festigkeit und die Gebrauchsfähigkeit des Spannringes in besonders hohem Maße bereitgestellt werden.

Vorzugsweise enthält der einen Zahnzwischenraum aufweisende Zwischenzahnabschnitt zwei benachbarte Vertiefungen, so daß durch jede Vertiefung das Material des Spannringes sowohl in den Zwischenzahnabschnitt zwischen den beiden Vertiefungen wie auch in den Zahnabschnitt verdrängt wird. Die beiden Vertiefungen sind insbesondere beidseits des durch den Zahnzwischenraum geschwächten Bereichs des Spannringes angeordnet, so daß dieser durch Materialanhäufung verstärkt werden kann. Selbstverständlich können auch mehr als zwei benachbarte Vertiefungen zum Umformen des Material an einem Zahn oder einem Zwischenzahnabschnitt vorgesehen sein.

Das verdrängte Material kann am gesamten Zahnabschnitt und insbesondere an der Zahnspitze des Zahnabschnitts einen vom Spannring hervorstehenden Materialvorsprung oder eine Auswölbung bilden. Das Material kann sich somit aus der Seitenfläche des Spannringes auswölben und im Querschnitt eine durch ein Form- oder Preßwerkzeug bestimmte Form erhalten. Das Material kann aber auch in Zahnrichtung zur Zahnspitze hin verdrängt werden und die Zahnspitze damit verlängern.

Diese Aufgabe wird weiterhin bei einem Spannring mit den Merkmalen des Oberbegriffs des Anspruchs 5 erfindungsgemäß dadurch gelöst, daß in den Spannring voneinander beabstandete Vertiefungen eingedrückt sind und daß das Material des Spannringes von den Vertiefungen in die Zwischenabschnitte zwischen den Vertiefungen verdrängt ist, so daß an dem vor der Verformung ungezahnten Innenrand des Spannringes zahnartige Materialvorsprünge als Eingriffsstellen gebildet sind. Bei dieser Lösung ist es nicht erforderlich, an dem Spannring bzw. an einem Metallstreifen, aus dem der Spannring hergestellt wird, zunächst eine Verzahnung zu bilden. Vielmehr werden durch die Materialverdrängung und Materialverlagerung in bestimmte Zonen des Spannringes und insbesondere an den Innenrand des Spannrings dort Materialvorsprünge gebildet, die die Funktion von scharfkantigen Eingriffsstellen oder Zähnen übernehmen. Damit können beim Herstellen der Vertiefungen in einem Arbeitsgang kostengünstig auch die Eingriffsstellen oder Zähne hergestellt werden.

Vorteilhafte Ausgestaltungen der Erfindung sind in den jeweiligen Unteransprüchen angegeben.

Zweckmäßigerweise bildet das verdrängte Material aus der Fläche des Spannringes hervorstehende Materialvorsprünge oder Auswölbungen insbesondere an der Außenkante des Innenrandes des Spannringes, wobei die Außenkante des konisch geformten Spannringes am Innenrand des Spannringes benachbart zum axial äußeren Ende der Rohrkupplung liegt.

Die Anzahl der durch die Vertiefungen gebildeten Zähne bzw. zahnartigen Eingriffsstellen wird z. B. durch die Anforderungen an die Haltekraft des Spannringes an dem jeweiligen Rohr oder durch seine Größe bestimmt. Vorzugsweise enthält der Spannring eine solche Anzahl von Vertiefungen, daß zumindest drei Zähne bzw. zahnartige Eingriffsstellen über den Umfang des Spannringes gebildet sind.

Die Vertiefungen können über die gesamte Breite des Spannringes oder nur in einem Teilabschnitt benachbart zum Innenrand des Spannringes bzw. zu den Zähnen gebildet sein. Damit können bedarfsweise unterschiedliche Materialverstärkungsbereiche und Materialverfestigungszonen auch in Querrichtung des Spannringes hergestellt werden. Die Vertiefungen können in Draufsicht als längliche Streifen oder als runde oder elliptische Bereiche oder auch in anderer Form gebildet sein. Grundsätzlich kann die Größe und Verteilung bzw. Anordnung der Vertiefungen im Rahmen der Erfindung weitgehend variiert werden.

Schließlich können die Vertiefungen grundsätzlich an der Außenseite und/oder der Innenseite des Spannringes gebildet sein, um die gewünschten Materialverdrängungen zu erzielen. Die Vertiefungen können auf den beiden sich gegenüberliegenden Flächenseiten des Spannringes in gleichartiger oder unterschiedlicher Form und/oder Tiefe und/oder Positionierung angeordnet sein. Somit können die beidseitigen Vertiefungen deckungsgleich oder gegeneinander versetzt angeordnet sein.

Die Aufgabe wird auch durch ein Verfahren mit den Merkmalen des Anspruchs 12 gelöst. Dadurch, daß bei diesem Verfahren in eine oder beide Seitenflächen eines Metallstreifens im wesentlichen quer zu seiner Längserstreckung voneinander beabstandete Vertiefungen eingedrückt werden und dabei Material des Metallstreifens von den Vertiefungen in die benachbarten Bereiche verdrängt wird, wodurch diese benachbarten Bereiche verdickt werden und diese Verdickungen an einem Rand des Metallstreifens, der den Innenrand des aus dem Metallstreifen anschließend geformten Spannringes darstellt, Materialvorsprünge als Eingriffsstellen bilden, kann auf einfache Weise ein erfindungsgemäßer Spannring mit guten Festigkeitseigenschaften bei hoher Haltekraft aufgrund der gebildeten Zähne hergestellt werden.

Das Verfahren kann zweckmäßigerweise derart ausgeführt werden, daß an dem Metallstreifen Zähne durch Ausformen oder Ausstanzen von Zahnzwischenräumen oder Zahnaussparungen vor oder nach dem Herstellen der Vertiefungen gebildet werden.

Insbesondere können die Vertiefungen mittels eines Rollwerkzeugs gerollt oder mittels eines Preßwerkzeugs gedrückt werden, jedoch sind auch andere spanlos umformende Verformungswerkzeuge geeignet.

Nachfolgend wird die Erfindung anhand von Ausführungsbeispielen unter Bezugnahme auf die Zeichnung näher erläutert. Es zeigt:
- Fig. 1: in einer perspektivischen Draufsicht und im Teilschnitt eine Rohrkupplung des Standes der Technik mit einer Dichtungsmanschette und einem schematisch dargestellten Spannring an einer Verbindungsstelle zweier Rohre;
- Fig. 2: in einer Schnittansicht die Rohrkupplung der Fig. 1;
- Fig. 3: in einer Schnittansicht den Spannring der Rohrkupplung;
- Fig. 4: in einer Seitendraufsicht den Spannring der Rohrkupplung;
- Fig. 5a: in einer Draufsicht ein einer ebenen Teildarstellung ein erstes Ausführungsbeispiel eines erfindungsgemäßen Spannrings;
- Fig. 5b: in einer Seitenansicht den erfindungsgemäßen Spannring der Fig. 5a;
- Fig. 5c: in einer Vorderansicht den erfindungsgemäßen Spannring der Fig. 5a;
- Fig. 6: in einer perspektivischen Schnittansicht die Rohrkupplung mit dem erfindungsgemäßen Spannring;
- Fig. 7a: in einer Draufsicht ein zweites Ausführungsbeispiel eines erfindungsgemäßen Spannrings in einer flachen Abwicklung in Teildarstellung;
- Fig. 7b: in einer Seitenansicht den erfindungsgemäßen Spannring der Fig. 7a;
- Fig. 7c: in einer Vorderansicht den erfindungsgemäßen Spannring der Fig. 7a; und
- Fig. 8: in einer perspektivischen Schnittansicht die Rohrkupplung mit dem zweiten Ausführungsbeispiel des erfindungsgemäßen Spannrings.

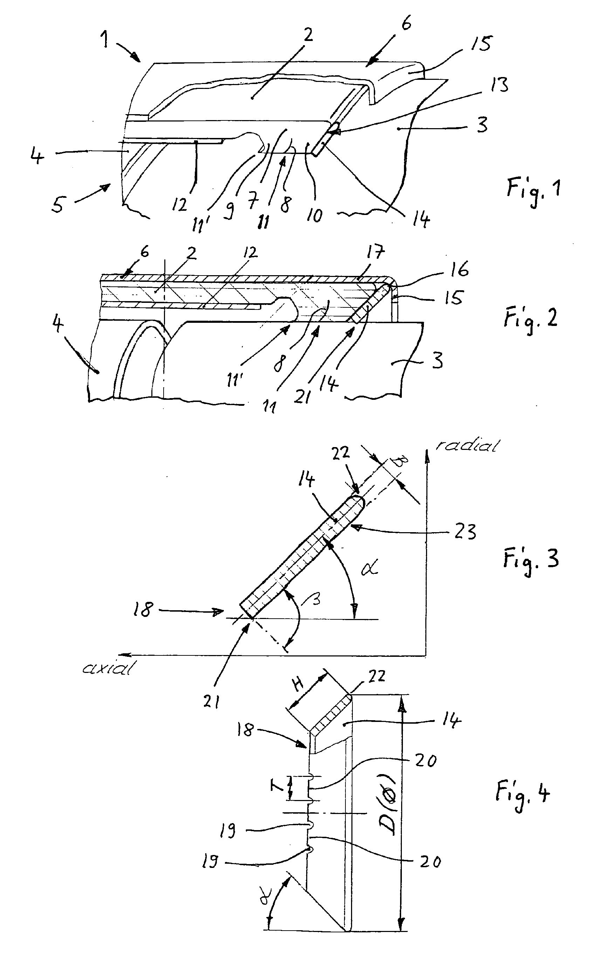

Eine in den Fig. 1 und 2 dargestellte Rohrkupplung 1 mit einer elastomeren Dichtungsmanschette 2 ist grundsätzlich entsprechend der in der EP 0 897 505 B1 und in der EP 0 931 966 B1 beschriebenen Rohrkupplung aufgebaut, wobei die Dichtungsmanschette 2 beispielsweise entsprechend der in der DE 44 08 743 C2 beschriebenen Dichtvorrichtung gebildet ist. Nachfolgend werden die an sich schon bekannten Elemente der Rohrkupplung 1 nur kurz erläutert, ansonsten wird auf die genannten Druckschriften verwiesen.

Die Rohrkupplung 1 ist zum Verbinden und Abdichten von zwei Rohren 3 und 4 einer Rohrleitung in etwa zentrisch zu einer Verbindungsstelle 5 der beiden Rohrenden angeordnet (in Fig. 1 ist der spiegelsymmetrisch ausgebildete rechte Teil der Rohrkupplung dargestellt). In einem Gehäuse 6 ist die Dichtungsmanschette 2 aus elastomerem Werkstoff angeordnet, die an ihren beiden axialen Endbereichen als Abdichtung jeweils einen Ringwulst 7 aufweist. Das Gehäuse 6 ist mit einer Verschlußeinrichtung (hier nicht dargestellt, siehe EP 0 931 966 B1) versehen, so daß es an der vorgesehenen Rohrkupplungs- oder Rohrverbindungsstelle 5 geschlossen und dabei verengt werden kann, wobei die Dichtungsmanschette 2 mit ihren beiden Ringwülsten 7 radial an die Rohre 3 bzw. 4 angedrückt wird.

Durch einen ringförmigen, zur Längsachse der Rohrkupplung 1 geneigten Spalt 8 wird jeder Ringwulst 7 in zwei benachbarte Radialwülste 9 und 10 unterteilt, wobei der äußere Radialwulst 10 eine spitzwinkelige, einwärts weisende Dichtlippe 11 bildet. Der innere Ringwulst 9 enthält ebenfalls eine spitzwinklige Dichtlippe 11'. Eine ringförmige Einlage 12, z. B. aus einem Stahlband, hält beim Schließen der Rohrkupplung die Dichtungsmanschette 2 beabstandet von dem beiden Rohren 3 und 4.

Jede axiale Stirnseite 13 der Dichtungsmanschette 2 ist konisch einwärts zur Längsachse der Rohrkupplung 1 abgeschrägt. An der konischen Ringfläche der Stirnseite 13 liegt ein konisch geformter Spannring 14 aus einem metallischen Werkstoff und insbesondere aus einem Federstahl oder einem gleichartigen Werkstoff an, der zwischen der Dichtungsmanschette 2 und einer radialen Endwand 15 des Gehäuses 6 eingefügt ist und sich axial und radial in einer Kehle 16, die vom zylindrischen Gehäuseteil 17 und der Endwand 15 gebildet ist, abstützt. Der Spannring 14 kann sich alternativ auch an einer ringförmigen Erhebung oder einer Nut (nicht dargestellt) am Gehäuse 6 abstützen. Der Spannring 14 ist an seinem Umfang unterteilt. Seine beiden Enden sind derart voneinander beabstandet, daß sie sich beim Verspannen des Gehäuses 6 nicht überdecken, oder sie sind in alternativer Gestaltung überlappend angeordnet.

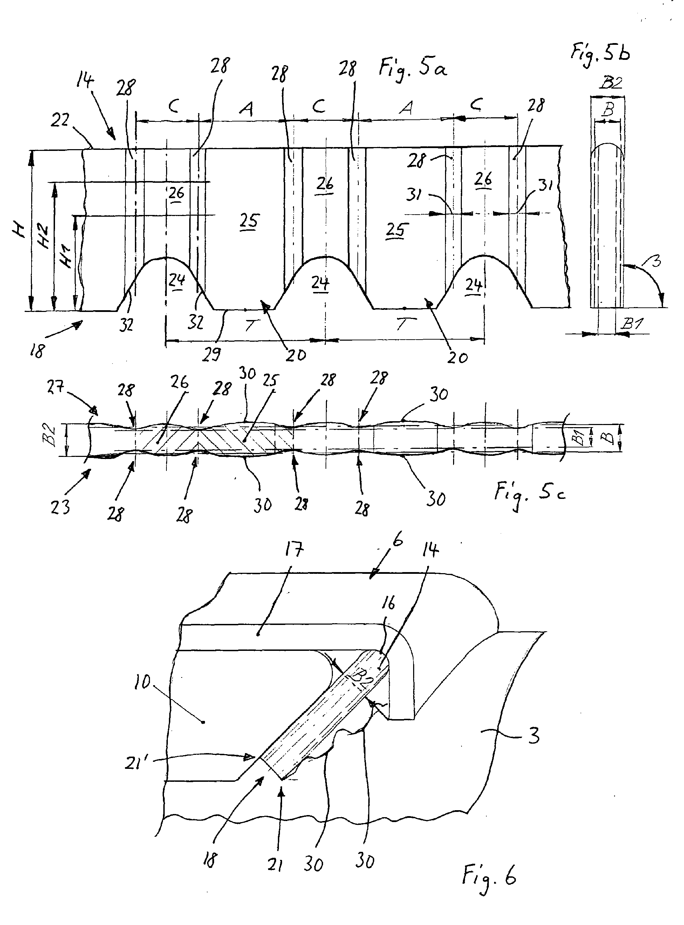

Der bekannte Spannring 14 weist an seinem dem Rohr 3 bzw. 4 zugewandten Innenrand 18 eine Vielzahl von am Innenumfang voneinander beabstandeten Einkerbungen oder Aussparungen 19 auf (siehe Fig. 4), zwischen denen Zähne 20 mit einer scharfen Kante 21 zum Eingriff mit dem Umfang des Rohres 3 bzw. 4 gebildet sind.

Der Spannring 14 weist einen Konuswinkel α (siehe Fig. 3 und 4) von zweckmäßigerweise etwa 45° auf, jedoch kann dieser Winkel auch größer oder kleiner gewählt werden. Der Winkel der konischen Ringfläche der Stirnseite 13 der Dichtungsmanschette 2 gegenüber der Längsachse der Rohrkupplung 1 ist zweckmäßigerweise von ähnlicher Größe. Jedoch muß die Ringfläche nicht streng konisch sein. Sie kann auch einwärts gekrümmt sein, wobei sich der elastische Werkstoff der Dichtungsmanschette 2 dennoch an den Spannring 14 anlegt.

Der Außenrand 22 des Spannringes 14 ist im Längsquerschnitt betrachtet abgerundet und an die Kehle 16 des Gehäuses 6 angepaßt. Der Innenrand 18 des Spannringes 14 ist als eine Umfangsfläche gebildet, die unter einem Winkel β von beispielsweise 90° gegenüber der Außenseite 23 des Spannringes 14 angeordnet ist und somit die Außenkante 21 im Bereich der Zähne 20 bildet, die am Rohr 3 bzw. 4 im Eingriff ist.

Durch den Spannring 14 ist gewährleistet, daß weder Verschmutzung noch andere unerwünschte oder schädliche Umwelteinflüsse wie UV-Strahlung oder Ozon an die Dichtungsmanschette 2 gelangen können. Der Spannring 14 hat in diesem Fall die Funktion eines Schutzringes. Des weiteren übt der Spannring 14 bei an zwei Rohren 3, 4 verspannter Rohrkupplung 1 Druck in axialer Richtung auf den äußeren Radialwulst 10 aus und verhindert ein Abfließen des elastomeren Werkstoffes durch den Spalt zwischen der Endwand 15 des Gehäuses 6 und dem Rohr 3 bzw. 4 über die Lebensdauer der Dichtungsmanschette 2.

Der Spannring 14 drückt sich beim Schließen des Gehäuses 6 und beim Verspannen der Rohrkupplung 1 mit seiner am Innenrand 18 gebildeten scharfkantigen Außenkante 21 bzw. der Kante der Zähne 20 in die Rohroberfläche ein und krallt sich daran fest (siehe Fig. 2). Der Spannring 14 wird dadurch axial am Rohr 3 bzw. 4 festgelegt, so daß die Rohrkupplung 1 relative axiale Bewegungen der beiden Rohre 3 und 4 verhindert. Diese Dichtwirkung bleibt auch bei dynamischem Wechsel des Innendruckes des in der Rohrleitung bzw. den Rohren 3 und 4 enthaltenen Fluids erhalten.

Der erfindungsgemäße Spannring 14 enthält gemäß einem ersten Ausführungsbeispiel (siehe Fig. 5a-c und 6) an seinem Innenrand 18 abwechselnd Zähne 20 und Zahnzwischenräume 24, die z. B. aus einem flachen Metallband, das für die Herstellung des Spannringes 14 verwendet wird, ausgestanzt werden, und die Zähne 20 enthaltende Zahnabschnitte 25 sowie den Zahnzwischenräumen 24 zugeordnete Zahnzwischenabschnitte 26, die sich dementsprechend abwechseln. Die Zahnteilung T des flächig dargestellten Spannringes 14 wird somit vom Abstand der Mittellinien zweier benachbarter Zahnzwischenabschnitte 26 bzw. Zahnzwischenräume 24 festgelegt.

In jedem Zahnzwischenabschnitt 26 des Spannringes 14 sind in die sich gegenüberliegende Außenfläche 23 und Innenfläche 27 jeweils zwei voneinander beabstandete Vertiefungen 28 eingepreßt, die sich in Querausrichtung über die Breite des Spannringes 14 vom Außenrand 22 zum Innenrand 18 bzw. bis an den Zahnzwischenraum 24 erstrecken. Die Vertiefungen 28 in den beiden Flächen 23 und 27 liegen sich genau gegenüber, so daß durch die eingedrückten Vertiefungen 28 der Querschnitt des Spannringes 14 verringert ist. Beim Eindrücken jeder Vertiefung 28 wird das Material des Spannringes 14 von der Vertiefung 28 nach beiden Seiten hin (d. h. in Längs- oder Umfangsrichtung des Spannringes 14) gedrückt, so daß sowohl im Zahnzwischenabschnitt 26 des Spannringes 14 zwischen den beiden Vertiefungen 28 wie auch im Zahnabschnitt 25 zwischen den beiden an diesen angrenzenden Vertiefungen 28 eine Verdickung des Spannringes 14 erfolgt und damit der Querschnitt des Spannringes 14 hier vergrößert ist. Der Spannring 14 weist als Verdickung zwischen den Vertiefungen 28 beispielsweise beidseitige Auswölbungen auf.

Durch die Verdickung oder Auswölbung im Zahnabschnitt 25 des Spannringes 14 wird auch der Zahn 20 und insbesondere die Zahnspitze 29 verdickt, wobei durch die Auswölbungen die an der Zahnspitze 29 beidseitig gebildeten Kanten (äußere Kante 21 und innere Kante 21', siehe Fig. 6) ebenfalls aus den Flächen oder Flachseiten des Spannringes 14 heraus gewölbt verlaufen. Bei dem konisch geformten Spannring 14 ist dann die äußere Kante 21 im Eingriff mit dem Rohr 3 bzw. 4. Durch die ausgewölbte Zahnspitze 29 ist diese bzw. deren Innenkante nur über eine kurze Strecke im Eingriff, der somit annähernd als Punkteingriff 30 oder Punktberührung bezeichnet werden kann (siehe Fig. 6).

Die Breite 31 wie auch die Tiefe B₁ der eingeprägten Vertiefungen 28 (Tiefe B₁ relativ zu der Dicke B des unverformten Spannringes 14 oder der Dicke B₂ der Auswölbung) kann z. B. abhängig vom Material des Spannringes 14 gewählt werden. Die beiden einem Zahnzwischenraum 24 zugeordneten Vertiefungen 28 sind zweckmäßigerweise symmetrisch zu dem Zahnzwischenraum 24 angeordnet und enden vorzugsweise an den beiden Flanken 32 des Zahnzwischenraumes 24. Der Abstand A zwischen zwei einem bestimmten Zahnabschnitt 25 zugeordneten Vertiefungen 28 kann gleich dem Abstand C zwischen zwei einem Zahnzwischenabschnitt 26 zugeordneten Vertiefungen 28 sein oder auch größer wie auch kleiner.

Die Vertiefungen 28 können über die gesamte Breite des Spannringes (Breite H) gebildet sein oder sie sind nur über Teilbreiten gebildet (z. B. H₁ oder H₂, siehe Fig. 5a).

Durch die Verdickung 28 im Zahnzwischenabschnitt 26 wird die wegen des Zahnzwischenraums 24 schmalste und damit geschwächte Stelle des Spannringes 14 verstärkt. Durch das Eindrücken der Vertiefung 28 wird das Material des Spannringes 14 kaltverformt, was bei entsprechender Materialwahl zu einer Verfestigung des Materials führen kann.

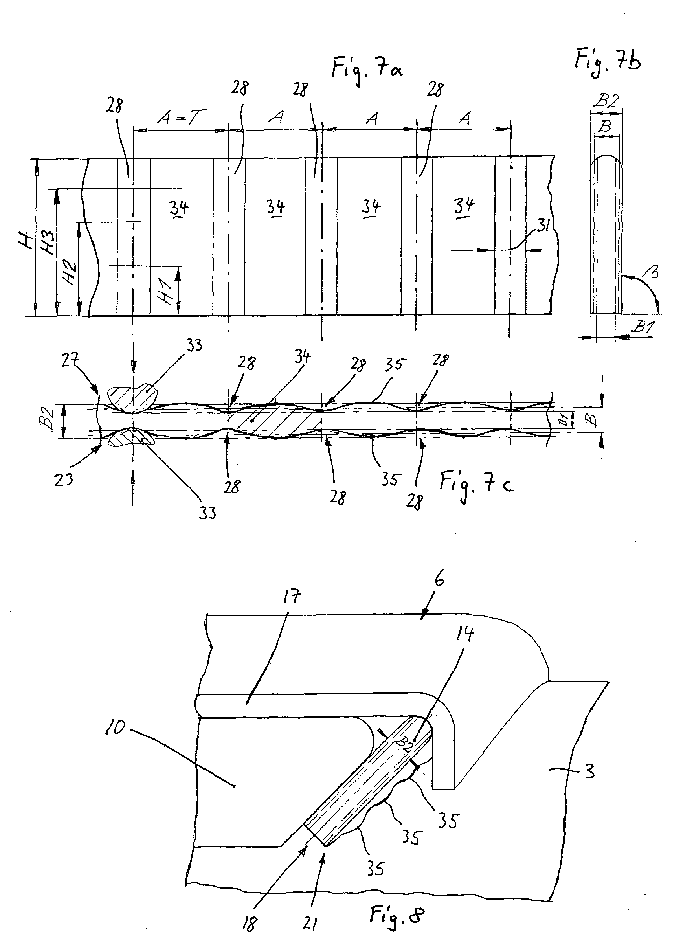

Der erfindungsgemäße Spannring 14 enthält gemäß einem zweiten Ausführungsbeispiel (siehe Fig. 7a-c und 8) eingeprägte Vertiefungen 28, die sich rinnenartig über die Breite H des Spannringes 14 in einem gleichmäßigen Abstand A voneinander erstrecken (Abstand A der Mittellinien zweier benachbarter Vertiefungen 28). Beim Herstellen der Vertiefungen 28, z. B. mittels eines ein- oder zweiseitig wirkenden Roll- oder Preßwerkzeugs 33, an einer oder beiden gegenüberliegenden Flächen 23 und 27 des Spannringes 14 bzw. des Metallbandes, aus dem der Spannring 14 gebildet wird, wird der Querschnitt des Spannringes 14 entlang der Mittellinie der Vertiefung 28 von einer Ausgangsdicke B auf eine minimale Dicke B₁ reduziert (siehe Fig. 7c). Dabei wird das Material beidseits in Längsrichtung des Spannrings 14 bzw. Metallbandes weggedrückt, so daß in dem Zwischenabschnitt 34 zwischen den beiden Vertiefungen 28 die Dicke des Spannringes 14 zunimmt und z. B. entlang einer Mittellinie einer beidseitigen Erhöhung oder Auswölbung der Querschnitt des Spannringes 14 auf die Dicke B₂ vergrößert wird. Wenn die Erhöhung als Auswölbung mit einer zentralen Linie mit maximaler Höhe gebildet ist (siehe Fig. 7c), bildet das Ende der zentralen erhöhten Linie einen Punkt an der Kante 21 des Innenrandes 18 des Spannringes 14 und somit eine scharfkantige im wesentlichen punktförmige Eingriffsstelle 35 in der Art eines Zahnes. Der Spannring 14 liegt im verspannten Einbauzustand (siehe Fig. 8) mit seinen Eingriffsstellen 35 am Umfang des Rohres 3 an, wobei sich die Eingriffsstellen 35 in Abhängigkeit der Materialien des Spannringes 14 und des Rohres 3 mehr oder weniger weit in die Außenwand des Rohres 3 eindrücken können.

Sowohl die Breite 31 der Vertiefungen 28, ihr die Teilung bzw. Zahnteilung T bestimmender gegenseitiger Abstand A wie auch ihre Länge H (H₁, H₂ oder H₃) quer zur Umfangsrichtung des Spannringes 14 und die Form und Tiefe der Vertiefungen 28 kann vergleichbar beim ersten Ausführungsbeispiel bedarfsweise variiert werden.

### Bezugszeichenliste

- 1: Rohrkupplung
- 2: Dichtungsmanschette
- 3: Rohr
- 4: Rohr
- 5: Verbindungsstelle
- 6: Gehäuse
- 7: Ringwulst
- 8: Spalt
- 9: Radialwulst
- 10: Radialwulst
- 11: Dichtlippe
- 12: Einlage
- 13: Stirnseite
- 14: Spannring
- 15: Endwand
- 16: Kehle
- 17: Gehäuseteil
- 18: Innenrand
- 19: Aussparung
- 20: Zahn
- 21: Kante
- 22: Außenrand
- 23: Außenseite
- 24: Zahnzwischenraum
- 25: Zahnabschnitt
- 26: Zahnzwischenabschnitt
- 27: Innenfläche
- 28: Vertiefung
- 29: Zahnspitze
- 30: Punkteingriff
- 31: Breite
- 32: Flanke
- 33: Rollwerkzeug
- 34: Zwischenabschnitt
- 35: Eingriffsstelle

## Patentansprüche

1. Spannring einer spannbaren Rohrkupplung zum axialen Verbinden zweier Rohre, wobei der in Umfangsrichtung unterteilte und aus metallischem Werkstoff hergestellte Spannring beim Schließen des Gehäuses der Rohrkupplung mittels an seinem Innenrand gebildeter Zähne in einen Halteeingriff an der Außenseite des zugeordneten Rohres verspannt wird,
**dadurch gekennzeichnet,**
**daß** in den Spannring (14) in einem Zwischenzahnabschnitt (26) zwischen zwei benachbarten Zähnen (20) zumindest eine Vertiefung (28) eingedrückt ist und das Material des Spannringes (14) von der Vertiefung (28) zu dem den Zahn (20) aufweisenden Zahnabschnitt (25) verdrängt und/oder in dem Zwischenzahnabschnitt (26) verlagert ist.

2. Spannring nach Anspruch 1,
**dadurch gekennzeichnet, daß** der einen Zahnzwischenraum (24) aufweisende Zwischenzahnabschnitt (26) zwei benachbarte Vertiefungen (28) aufweist und durch jede Vertiefung (28) das Material des Spannringes (14) sowohl in den Zwischenzahnabschnitt (26) zwischen den beiden Vertiefungen (28) wie auch in den Zahnabschnitt (25) verdrängt ist.

3. Spannring nach Anspruch 1 oder 2,
**dadurch gekennzeichnet, daß** das verdrängte Material an der Zahnspitze (29) des Zahnabschnitts (25) einen vom Spannring (14) hervorstehenden Materialvorsprung oder eine Auswölbung bildet.

4. Spannring nach einem der Ansprüche 1 bis 3,
**dadurch gekennzeichnet, daß** der dem Zahnzwischenraum (24) zugeordnete Zwischenzahnabschnitt (26) durch Materialverdickung und/oder Materialverfestigung verstärkt ist.

5. Spannring einer spannbaren Rohrkupplung zum axialen Verbinden zweier Rohre, wobei der in Umfangsrichtung unterteilte und aus metallischem Werkstoff hergestellte Spannring beim Schließen des Gehäuses der Rohrkupplung mittels seines Innenrandes in einen Halteeingriff an der Außenseite des zugeordneten Rohres verspannt wird,
**dadurch gekennzeichnet,**
**daß** in den Spannring (14) voneinander beabstandete Vertiefungen (28) eingedrückt sind und daß das Material des Spannringes (14) von den Vertiefungen (28) in die Zwischenabschnitte (34) zwischen den Vertiefungen (28) verdrängt ist, so daß an dem vor der Verformung ungezahnten Innenrand (18) des Spannringes (14) zahnartige Materialvorsprünge als Eingriffsstellen (35) gebildet sind.

6. Spannring nach Anspruch 5,
**dadurch gekennzeichnet, daß** das verdrängte Material aus der Fläche des Spannringes (14) hervorstehende Materialvorsprünge oder Auswölbungen insbesondere an der Außenkante (21) des Innenrandes (18) des Spannringes (14) bildet.

7. Spannring nach einem der Ansprüche 1 bis 6,
**dadurch gekennzeichnet, daß** zumindest drei Zähne bzw. zahnartige Eingriffsstellen über den Umfang des Spannringes (14) gebildet sind.

8. Spannring nach einem der Ansprüche 1 bis 7,
**dadurch gekennzeichnet, daß** die Vertiefungen (28) in einem Teilabschnitt benachbart zum Innenrand (18) des Spannringes (14) oder über die gesamte Breite (H) des Spannringes (14) gebildet sind.

9. Spannring nach einem der Ansprüche 1 bis 8,
**dadurch gekennzeichnet, daß** die Breite der Vertiefungen (28) und/oder der Abstand eines Paares von Vertiefungen (28) auf die Materialeigenschaften und/oder die Dicke des Spannringes (14) abgestimmt ist.

10. Spannring nach einem der Ansprüche 1 bis 9,
**dadurch gekennzeichnet, daß** die Eingriffsstellen im wesentlichen als Punkteingriff (30; 35) gebildet sind.

11. Spannring nach einem der Ansprüche 1 bis 10,
**dadurch gekennzeichnet, daß** die Vertiefungen (28) an der Außenseite (23) und/oder der Innenseite (27) des Spannringes (14) gebildet sind.

12. Verfahren zum Herstellen eines Spannrings für eine Rohrkupplung, insbesondere nach einem der Ansprüche 1 bis 11,
**dadurch gekennzeichnet,**
**daß** in eine oder beide Seitenflächen eines Metallstreifens im wesentlichen quer zu seiner Längserstreckung voneinander beabstandete Vertiefungen eingedrückt werden und dabei Material des Metallstreifens von den Vertiefungen in die benachbarten Bereiche verdrängt wird, wodurch diese benachbarten Bereiche verdickt werden und diese Verdickungen an einem Rand des Metallstreifens, der den Innenrand des aus dem Metallstreifen anschließend geformten Spannringes darstellt, Materialvorsprünge als Eingriffsstellen bilden.

13. Verfahren nach Anspruch 12,
**dadurch gekennzeichnet, daß** an dem Metallstreifen Zähne durch Ausformen oder Ausstanzen von Zahnzwischenräumen oder Zahnaussparungen vor oder nach dem Herstellen der Vertiefungen gebildet werden.

14. Verfahren nach Anspruch 12 oder 13,
**dadurch gekennzeichnet, daß** die Vertiefungen mittels eines Rollwerkzeugs gerollt oder mittels eines Preßwerkzeugs gedrückt werden.
